# EUROPEAN PATENT APPLICATION

(11) **EP 1 312 468 A1**
(43) Date of publication of application: **21.05.2003**
(21) Application number: 01204422.8
(22) Date of filing: 19.11.2001
(51) Int. Cl.: B32B 15/08

(54) **Layered structure**

(71) Applicant: N.V. BEKAERT S.A., 8550 Zwevegem (BE)
(72) Inventor: Braekevelt, Geert, 8550 Zwevegem (BE); Dekeyser, Willem, 8310 Assebroek (BE); Lefever, Ignace, 8540 Deerlijk (BE); Lokere, Erwin, 8830 Hooglede (BE); Van Giel, Frans, 8500 Kortrijk (BE)

(57) **Abstract**

The invention relates to a layered structure comprising at least one metal structure comprising elongated metal elements and at least one metal sheet. The metal sheet is bonded to the metal structure by means of a thermoplastic material.

The invention further relates to a method of manufacturing an article comprising a layered structure and to the use of a layered structure as structural component.

## Description

### Field of the invention.

The invention relates to a layered structure comprising at least one metal structure comprising elongated metal elements and at least one metal sheet.
The invention further relates to a method of manufacturing a layered structure and to the use of a layered structure as structural component.

### Background of the invention.

At present, there is a high demand for composite materials characterised by a low weight and a high strength.
By using materials with a higher strength the thickness and thus the weight of the composites can be reduced. However, the reduction of the thickness of composites has its limits since by reducing the thickness, the stiffness will also be reduced. A minimum thickness will be necessary to assure a sufficient stiffness.

Composites consisting of alternating layers of metal sheets and polymer (thermoplastic or thermosetting) layers reinforced by means of glass, aramid or carbon fibers are known in the art.

### Summary of the invention.

It is an object of the present invention to provide a layered structure comprising at least one metal structure comprising elongated metal elements and at least one metal sheet.
It is another object to provide layered structures having a high strength to weight ratio.
It is a further object to provide layered structures characterised by a high bending stiffness.
It is still a further object to provide layered structures characterised by good damping properties and by a high impact resistance.
Furthermore, it is an object to provide layered structures that are easily deformable for example by a bending or deepdrawing operation.

According to a first aspect of the present invention a layered structure is provided.

The layered structure comprises
- at least one metal structure, having an upper and a lower surface. The metal structure comprises elongated metal elements.
- at least one metal sheet on at least the upper surface or the lower surface of the metal structure.
The metal sheet is bonded to the metal structure by means of a thermoplastic material.

An alternative embodiment of a layered structure comprises a metal structure and on each side of this metal structure a metal sheet.
The metal sheets are bonded to the metal structure by means of a thermoplastic material.

Further embodiments comprise a higher number of metal sheets with at least one metal structure inbetween two consecutive metal sheets.
The optimum number of metal sheets may be determined upon the application and the requirements that have to be met.
In principle the maximum number of metal sheets is not limited. However, it is preferred that the number of metal sheets of a layered structure is between 1 and 10. More preferably, the number of metal sheets of a layered structure is between 1 and 7, for example between 1 and 3.

For the purpose of this invention, elongated metal elements have to be understood in a broad meaning. They may comprise all kind of elongated elements comprising metal wires or metal cords.
Elongated metal elements comprise also metal wires or metal cords on which a coating, such as a metal coating or a polymer coating, is applied. Also metal wires or metal cords impregnated with a thermoplastic material or strips comprising a number of metal wires or metal cords embedded in a polymer material are considered as elongated metal elements.

The metal wires or metal cords can be made from any metal or metal alloy known in the art. Preferably, alloys such as low or high carbon steel or stainless steel alloys are used.

The wires may have various cross-sections and geometries, they may for example be circular, oval or flat.

As metal cords single-stranded as well as multi-stranded cords can be used. Some types of metal cords are 3x3 cords or 7x3 cords. Preference is given to metal cords with a large and rough surface, such as open cords. By using this type of metal cords, the mechanical anchoring in the thermoplastic material is increased. This type of cords can also be impregnated with a thermoplastic material to a higher degree.
Very suitable cords are high elongation cords or high impact cords.

The tensile strength of the steel wires is preferably higher than 1500 N/mm² and is for example between 1500 N/mm² and 3000 N/mm². The tensile strength is mainly dependent upon the composition of the steel and the diameter of the wire.

It may be desired to use elongated metal elements having a structural elongation. Preferred metal elements have an elongation of more than 0.3 %, for example 1 %, compared to the initial length of the metal element on which a force of at least 10 % of the total force at rupture of these elements is applied. The elongation of these elongated metal elements is due to the structural deformation of the elongated metal elements.
The use of this type of metal elements features the advantage that the bending properties of the layered structure are improved. When a layered structure comprising metal elements having a structural deformation is subjected to a forming process, the force needed to form the layered structure into a deformed article is partially used to elongate the elongated metal elements. The force applied will elongate the elongated metal elements by partially removing the structural deformation.
A structural deformation can be an undulation, either uni- or multidirectional as for example in crimped wires or crimped cords. Another deformation can be obtained by using a metal element having a spiral shape.

As mentioned above, also elongated metal elements such as metal wires or metal cords on which a metal coating is applied are considered as elongated metal elements. This metal coating can offer further characteristics, such as corrosion resistance and electrical or thermal conductivity, to the metal wires or cords.

To improve the corrosion resistance of the elongated metal elements, these elements can for example be coated with a zinc or a zinc alloy coating such as a brass coating. Another suitable zinc alloy is an alloy comprising 2 to 10 % Al and 0.1 to 0.4 % of a rare earth element such as La and/or Ce.

To improve the electrical and thermal conductivity a copper or copper alloy coating can be applied on the metal wires or cords.

Different embodiments of metal structures can be considered.

A first example of a metal structure comprises one or more layers of substantially parallel elongated metal elements. The elongated metal elements of the different layers may be extending in one direction or in two or more different directions.
Possibly, neighboring elongated metal elements such as metal wires are bonded to each other for example by means of an adhesive.

A second group of metal structures comprises a number of elongated metal elements forming a grid or a mesh, such as a welded grid or mesh. The elongated metal elements can be welded together, for example electrically welded at their cross-over points to form a welded mesh. Meshes with rectangular, square, hexagonal or diamond-shaped openings can be considered.

A third group of metal structures comprises fabrics. For the purpose of this invention a fabric has to be understood as a woven, knitted or braided structure.
This third group of metal structures comprises for example woven, knitted or braided structures made of elongated metal elements such as metal wires or metal cords; and woven, knitted or braided structures comprising a combination of metal wires or metal cords and polymer filaments of a thermoplastic material.
Also woven, knitted or braided structures comprising coated metal wires or cords; or woven, knitted or braided structures comprising strips are included in this third group of metal structures.

Examples of woven structures are :
- A fabric whereby the warp and/or the weft are formed by metal wires or metal cords.
- A fabric whereby the warp and/or the weft are formed by coated metal cords.
- Fabrics whereby the warp and/or the weft are a combination of metal wires or metal cords and coated metal wires or metal cords; or a combination of polymer filaments and coated metal wires or metal cords.

Possibly, the metal structures as described above, such as the metal structures of group one, group two and group three, comprise in addition to the elongated metal elements other elements such as carbon fibers, glass fibers or aramid fibers.

In other embodiments one or more of the metal structures are replaced by a structure comprising carbon fibers, glass fibers or aramid fibers or combinations thereof.

The metal structure and the metal sheet or sheets are bonded together by means of a thermoplastic material.
With a thermoplastic material is meant any thermoplast and any thermoplastic elastomer (TPE) and thermoplastic vulcanite (TPV). Examples of suitable thermoplastic materials are : polyethylene (PE), polypropylene (PP), polystyrene (PS), polyethylene terephthalate (PET), polyethylene napthalate (PEN), polybutene terephthalate (PBT), polyvinylchloride (PVC), polyester, polyamide (PA), polyimide (PI), polycarbonate (PC), styrene acrilonitryl (SAN), acrylonitrio-butadiene-styrene (ABS), thermoplastic polyurethane (TPU), thermoplastic polyolefins (TPO), thermoplastic copolyetheresters, copolymers of these polymers or similar materials.

The thermoplastic material can be present in the layered structure as coating on the elongated metal elements or as matrix of a strip comprising a number of elongated metal elements.
The thermoplastic material can also be present as filaments or strips, f.e. filaments or strips present in the fabric. Suitable filaments are for example polyamide filaments, polyethylene filaments, polypropylene filaments or polyester filaments.
Alternatively, the thermoplastic material can be present in the layered structure as a layer applied between the metal structure and the metal sheet. This layer of thermoplastic material can for example be applied on the metal structure by an extrusion process. In an alternative way, the layer of thermoplastic material comprises a sheet of a thermoplastic material placed inbetween the metal structure and the metal sheet.

The thermoplastic material acts as bonding material. After applying heat and/or pressure to the layered structure the thermoplastic material is binding the metal structure to the metal sheet.
The thermoplastic material preferably fills the interstices between the elongated metal elements after applying heat and/or pressure to the layered structure.

In order to assure a good adhesion between the metal and the thermoplastic material, an adhesion promoter can be applied on the metal element, on the metal structure and/or on the metal sheet. Suitable adhesion promoters are adhesives or glues. Other preferred adhesion promoters are bifunctional coupling agents such as silane compounds. One functional group of these coupling agents is responsible for the binding with the metal or metal oxides; the other functional group reacts with the polymer.
More details about these coupling agents can be found in the PCT application WO-A-99/20682.
Also aluminates, zirconates or titanates can be used as adhesion promoters.

A metal sheet of the layered structure of the present invention may comprise any kind of metal or metal alloy.
Preferred metal sheets are made of a metal or metal alloy selected from the group consisting of aluminium or aluminium alloys such as aluminium-copper alloys, aluminium-zinc alloys, iron-chromium-aluminium alloys known as Fecralloy®, steel such as stainless steel, titanium or titanium alloys, copper or copper alloys.

The metal sheet has for example a thickness ranging between 10 µm and 20.000 µm. Preferably, the metal sheet has a thickness between 10 µm and 10.000 µm. More preferably, the thickness of the metal sheet is between 10 µm and 1.000 µm, for example between 50 and 250 µm.
It has to be clear that the thickness of the metal sheet is mainly dependent upon the application of the layered structure.

The layered structure according to the present invention combines the features of the metal sheets and the features of the metal structure. The layered structure combines high strength, and particularly bending stiffness with low weight.
The bending properties are mainly determined by the metal sheets and more particularly by the Young's modulus of the metal sheets; the metal structure gives the layered structure the necessary strength and stiffness.

The layered structure as subject of the invention has the advantage to be easily deformable. Consequently, they are characterised by a high design flexibility.

Furthermore, the layered structure is characterized by good damping characteristics, such as sound damping; and by a high impact resistance.

Since the layered structure comprises a metal structure, the layered structure is provided with shielding properties. Layered structures according to the present invention can be used for the shielding of interfering radiation such as electromagnetic interfering (EMI) radiation of for example electronic equipment.

According to a second aspect of the present invention an article comprising a deformed layered structure as described above is provided.

The layered structure can be deformed by any technique known in the art. Preferred methods are deepdrawing, press forming, compression molding, bending or folding. Also thermoforming processes are very suitable to deform a layered structure according to the present invention. In a press forming operation a layered structure is heated and formed to shape in a two-part-tool under pressure.
In a thermoforming operation a layered structure is heated locally and deformed, f.e. folded.

According to a third aspect of the present invention a method of manufacturing an article comprising a layered structure is provided.
The method comprises the steps of
- providing a layered structure as described above;
- applying heat and/or pressure to said layered structure.

A great advantage of the layered structure according to the present invention is that it can be made in a continuous process.

The method may further comprise the step of
- subjecting said layered structure to a deformation process.

According to a further aspect, the use of a layered structure as described above as a structural component is provided.
This structural component can for example be used for all kind of transport applications, such as in automobiles, trains, containers, trailers...
The layered structure according to the present invention is also suitable as architectural component for example in building applications. Furthermore the layered structure can be used for machine construction and appliances.

A great advantage of the layered structures according to the invention is their low weight and high bending stiffness.

### Brief description of the drawings.

The invention will now be described into more detail with reference to the accompanying drawings wherein
- FIGURE 1 and 2 show cross-sections of two different embodiments of a layered structure according to the present invention;
- FIGURES 3, 4, 5, 7 and 9 show different forms of metal structure used in a layered structure according to the invention;
- FIGURE 6 shows coated elongated metal elements;
- FIGURE 8 shows a strip comprising a number of elongated metal elements embedded in a matrix of a thermoplastic material.

### Description of the preferred embodiments of the invention.

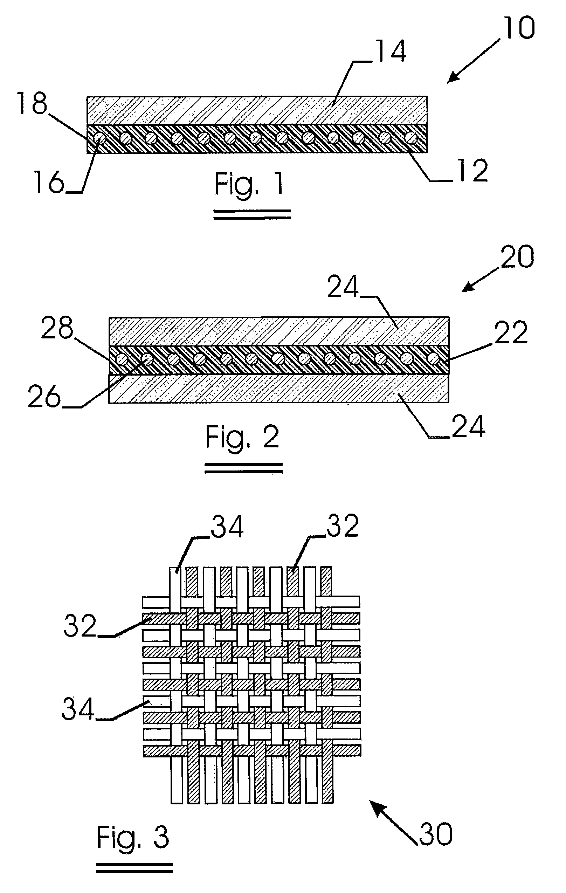

Referring to FIGURE 1 a layered structure 10 comprising a first layer 12 and a second layer 14 is provided. The first layer comprises a metal structure 16 embedded in a thermoplastic material 18. The second layer comprises an aluminium sheet 14.
The metal structure comprises a woven fabric comprising in the warp and weft direction steel wires having a diameter of 300 µm.
The aluminium sheet has a thickness of 200 µm.
A thermoplastic material 18 such as polyamide is binding the aluminium sheet to the metal structure.

The layered structure 10 as shown in FIGURE 1 is made as follow :
- first a woven fabric comprising steel wires in the warp and weft direction is provided;
- a polyamide sheet is placed on one surface of the woven fabric, for example on the upper surface of the woven fabric. Alternatively, a polyamide sheet is placed on both sides of the woven fabric, i.e. on its upper and lower surface.
- an aluminium sheet is placed on top of a polyamide sheet to form a layered structure;
- in a subsequent step heat is applied to the layered structure for example by leading the layered structure between heated rollers. By this heat the polyamide flows out and fills the interstices of the woven fabric in such a way that the woven fabric is completely embedded in the thermoplastic material.

FIGURE 2 shows an alternative embodiment of a layered structure 20 according to the present invention. The layered structure comprises a core layer 22 comprising a metal structure 26 embedded in a thermoplastic material 28, more particularly PET. The core layer is situated between two metal sheets 24.
The metal structure 22 is a woven fabric comprising steel cords in the warp and weft direction.
The metal alloy sheets comprise sheets made of a Fe-Cr-Al based alloy, known as Fecralloy®. The thickness of the sheet is 200 µm.

FIGURES 3, 4, 5, 7 and 9 show some different embodiments of metal structure that can be used in the layered structure according to the present invention.

FIGURE 3 is an illustration of a fabric comprising a combination of elongated metal elements 32 and filaments of a thermoplastic material 34.
Suitable filaments are for example polyamide filaments, polyethylene filaments, polypropylene filaments or polyester filaments.
For the purpose of this application, a filament has to be understood as an elongated element of a thermoplastic material. It may have various cross-sections, such as circular, oval, rectangular. Strips made from a thermoplastic material are also suitable.
Different filaments may be plied together to form filament yarn.

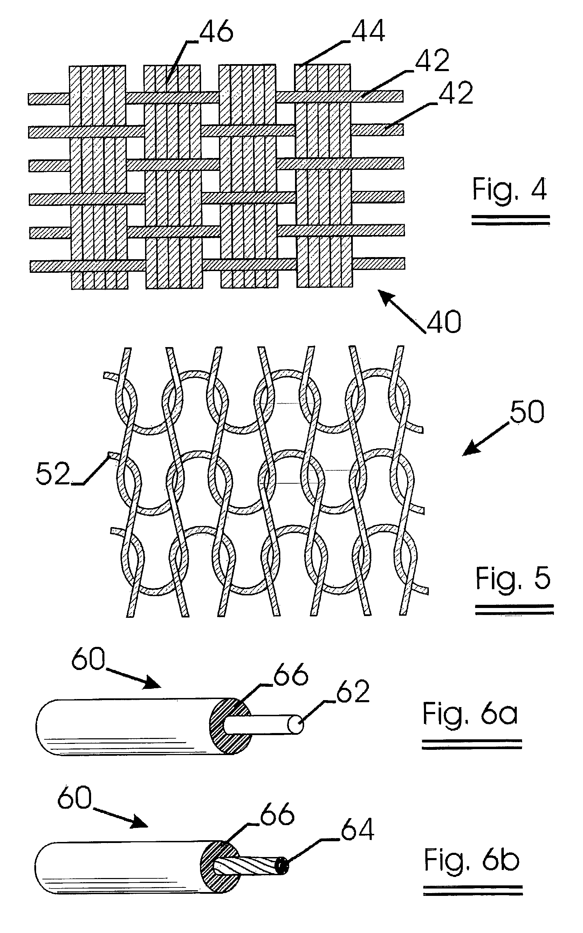

FIGURE 4 shows a fabric comprising elongated metal elements, more particularly steel cords. The elongated metal elements forming the warp 42 are widely spaced and are criss-crossed by a bundle or a group 46 of elongated metal elements 44.
The number of elongated metal elements in the warp and the weft direction can be increased or decreased in order to influence the flexibility of the metal structure in one or more directions.
For a person skilled in the art, it has to be clear that the elongated metal elements in the warp or the weft direction can be replaced by filaments of a thermoplastic material.

FIGURE 5 shows a fabric comprising a knitted structure 50. The knitted structure comprises elongated metal elements such as metal cords 52. In an alternative embodiment a knitted structure comprises polymer filaments and elongated metal elements which are knitted together.

FIGURE 6 a and 6 b show coated elongated metal elements, more particularly a coated metal wire (Fig. 6a) and a coated metal cord (Fig. 6b).
The coating can be applied to the metal wires or metal cords by any conventional technique. A possible coating technique comprises for example extrusion.
For the purpose of this invention a coated metal wire or metal cord has to be understood as an element substantially surrounded by at least one layer of a polymer material, f.e. a thermoplastic material. This means that this can also be realised by wrapping thermoplastic threads or filaments around a metal cord.

It can be desirable that the metal wires or cords are coated with a number of consecutive layers of a thermoplastic material whereby the material most closely to the metal surface has an elastic modulus which approaches the modulus of the wire or cord, whereas the outer layer of the thermoplastic material has a modulus approaching the modulus of the thermoplastic material used as bonding material.

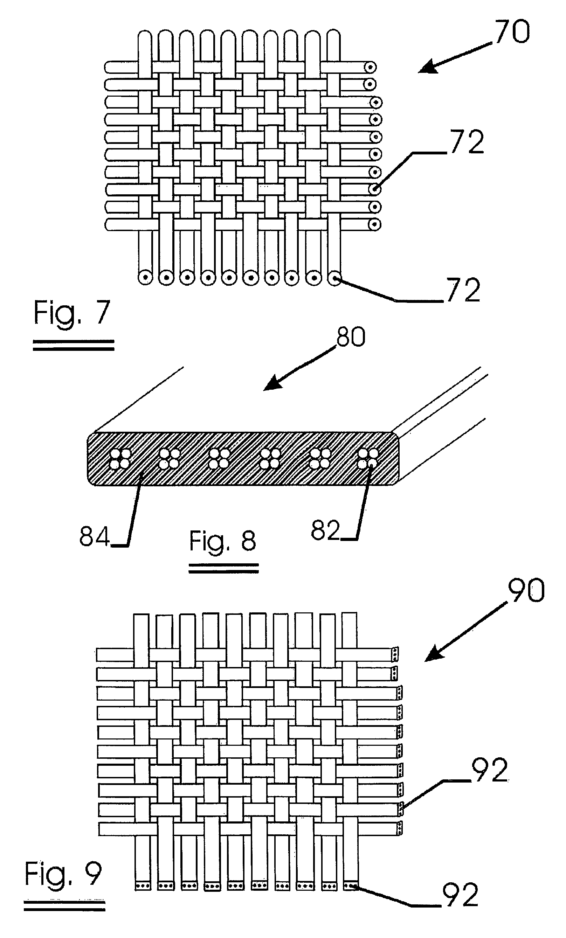

FIGURE 7 shows a woven fabric 70 comprising coated elongated metal elements 72. The coated elongated metal elements are for example the elements shown in FIGURE 6a and 6b. In the embodiment shown in FIGURE 7 both the warp and the weft of the woven fabric 70 comprise coated elongated metal elements.

FIGURE 8 shows a strip 80, comprising a number of elongated metal elements 82, embedded in a matrix of a thermoplastic material 84. The elongated metal elements are for example metal wires or metal cords. The metal wires or metal cords are preferably located parallel in the plane of the strip. A possible method of manufacturing a strip is by coextrusion.

FIGURE 9 shows a woven fabric 90 comprising strips 92 as shown in FIGURE 8.

## Claims

1. A layered structure comprising
- at least one metal structure having an upper and a lower surface, said metal structure comprising elongated metal elements;
- at least one metal sheet on at least said upper or said lower surface; said metal sheet being bonded to said metal structure by means of a thermoplastic material.

2. A layered structure according to claim 1, whereby said layered structure comprises a metal sheet on said upper surface and a metal sheet on said lower surface.

3. A layered structure according to any one of the preceding claims, whereby the number of metal sheets is ranging between 1 and 10.

4. A layered structure according to any one of the preceding claims, whereby said elongated metal elements comprise metal wires or metal cords.

5. A layered structure according to any one of the preceding claims, whereby said elongated metal elements comprise coated metal wires or coated metal cords.

6. A layered structure according to any one of the preceding claims, whereby said elongated metal elements comprise strips, said strips comprising a number of metal wires or metal cords embedded in a matrix of a polymer material.

7. A layered structure according to any one of the preceding claims, whereby said metal structure comprises at least one layer of substantially parallel elongated metal elements.

8. A layered structure according to any one of the preceding claims, whereby said metal structure comprises a woven or welded mesh or grid.

9. A layered structure according to any one of the preceding claims, whereby said metal structure comprises a woven, knitted or braided structure.

10. A layered structure according to any one of the preceding claims, whereby said thermoplastic material comprises a thermoplast, a thermoplastic elastomer (TPE) or a thermoplastic vulcanite (TPV).

11. A layered structure according to any one of the preceding claims, whereby said thermoplastic material is selected from the group consisting of polyethylene (PE), polypropylene (PP), polystyrene (PS), polyethylene terephthalate (PET), polyethylene napthalate (PEN), polybutene terephthalate (PBT), polyvinylchloride (PVC), polyester, polyamide (PA), polyimide (PI), polycarbonate (PC), styrene acrilonitryl (SAN), acrylonitrio-butadiene-styrene (ABS), thermoplastic polyurethane (TPU), thermoplastic polyolefins (TPO), thermoplastic copolyetheresters, copolymers of these polymers.

12. A layered structure according to any one of the preceding claims, whereby an adhesion promoter is applied on said elongated metal elements, on said metal structure or on said metal sheet.

13. A layered structure according to any one of the preceding claims, whereby said metal sheet comprises a metal or metal alloy selected from the group consisting of aluminium, aluminium alloys such as aluminium-copper alloys, aluminium-zinc alloys, iron-chromium-aluminium alloys, steel, such as stainless steel, titanium or titanium alloys and copper or copper alloys.

14. A layered structure according to any one of the preceding claims, whereby said metal sheet has a thickness ranging between 10 and 20.000 µm.

15. An article comprising a deformed layered structure according to any one of claims 1 to 14.

16. A method of manufacturing an article comprising a layered structure; said method comprises the steps of
- providing a layered structure according to any one of claims 1 to 14;
- applying heat and/or pressure to said layered structure.

17. A method according to claim 16, whereby said method further comprises the step of
- subjecting said layered structure to a deformation process.

18. Use of a layered structure according to any one of claims 1 to 14 as a structural component.
